# EUROPEAN PATENT SPECIFICATION

(11) **EP 1 210 809 B1**
(45) Date of publication and mention of the grant of the patent: **23.12.2009**
(21) Application number: 00967647.9
(22) Date of filing: 05.09.2000
(51) Int. Cl.: H04L 29/06, H04N 7/15, H04L 12/64, H04W 84/02

(54) **DATA ROUTING MEANS AND METHOD**
VORRICHTUNG UND VERFAHREN ZUR DATENLEITWEGLENKUNG
DISPOSITIF ET PROCEDE D'ACHEMINEMENT DE DONNEES

(30) Priority: 10.09.1999 EP 99118117
(43) Date of publication of application: 05.06.2002
(73) Proprietor: TELEFONAKTIEBOLAGET LM ERICSSON (publ), 164 83 Stockholm (SE)
(72) Inventor: HAMELEERS, Heino, NL-6471 VN Kerkrade (NL); HUNDSCHEIDT, Frank, NL-6464 GC Kerkrade (NL)
(74) Representative: HOFFMANN EITLE
(86) International application number: PCT/EP2000/008664
(87) International publication number: WO 2001/020867

(56) References cited:
- WO-A-99/43172
- LINDBERGH D: "THE H.324 MULTIMEDIA COMMUNICATION STANDARD" IEEE COMMUNICATIONS MAGAZINE,US,IEEE SERVICE CENTER. PISCATAWAY, N.J, vol. 34, no. 12, 1 December 1996 (1996-12-01), pages 46-51, XP000636453 ISSN: 0163-6804

## Description

### Field of the Invention

The present invention relates the handling of multimedia calls between different communications networks.

### Background of the Present Invention

Presently, communications networks such as telephone networks are no longer restricted to exclusively transfer audio information, much rather telephone networks are used to transport various types of data, such as audio, video and computer data. If the transport of different types of data is coordinated or synchronized, one speaks of multimedia service. In other words, a multimedia service is a service that handles several types of media, such as audio and video, in a synchronized way from the user's point of view. When taking a video telephone as an example, where the user not only hears the counterpart but also sees the counterpart, the audio and video data must be synchronized, such that the sound and picture are synchronized. Therefore, a multimedia capability is more than the simple parallel transport of different types of data.

A multimedia service is not restricted to two users, but may involve multiple parties, multiple connections and the addition or deletion of resources and users within a single communication session. An example of this is a multimedia conference call, in which a plurality of users exchange video and audio data (and possibly computer data), in which certain users may leave the conference during the conference call, and where new users may enter the conference.

With progress in communications systems that allows larger band width, multimedia capabilities are being extended in communication networks. For example, video telephoning is an often used example for the capabilities of ISDN (Integrated Services Digital Network) networks, and the future introduction of ADSL (Asymmetric Digital Subscriber Lines) will probably increase this tendency. Equally, in the field of mobile or wireless communication, multimedia capabilities will be extended, as envisioned in the context of UMTS (Universal Mobile Telecommunications System).

At present, a number of standards and protocols are known for handling multimedia data in communication networks. The ITU-T (telecommunications standardization sector of the international telecommunication union) H.323 describes the support of multimedia for packet-switched bearers, and H.324 for circuit-switched bearers. A special standard, which is described in appendix C to H.324 and will be referred to as H.324M in the following, is based on the H.324 standard and is specifically designed for supporting multimedia over networks having low bit rate, such as conventional mobile networks (i.e. GSM). The basic H.324 standard describes multimedia over PSTN (Public Switched Telephone Network) networks, where H.324 for PSTN is based on the V.34 modem and provides a user rate of 28.8 kbps. Similarly, H.324I will refer to H.324 and appendix D, that describes a standard that is specifically designed for carrying multimedia over ISDN networks, and is based on the ISDN B-channel and provides multiples of 56/64 kbps (namely from 56 kbps up to 384 kbps). H.324M specifically describes multimedia for error-prone networks, such as radio networks. In theory rates between 8 kbps and 64 kbps can be provided per call.

The term "bearer" as used above refers to the actual carrier of data, such as the lowest three layers of the OSI layering scheme.

Within the H.324 standard, the H.223 protocol is used to multiplex the different media streams on one single bearer. In other words, the H.223 protocol is the multimedia multiplexing protocol that provides the rules for synchronous transport of different kinds of data streams that are associated with one another, such as an audio stream and a video stream. The H.223 protocol also provides rate adaptation between two end terminals. The mechanism used for rate adaptation is very vulnerable to bit errors, and therefore a specific protocol referred to as H.223M in the following (H.223 and appendices A and B) has been defined for use over error-prone networks, such as radio networks.

When interworking between H.324M and H.324/H.324I, the H.324 user plane is handled transparently in the intermediate network nodes, and only the end units act upon the user plane. In other words, the peers of a H.223 or H.223M connections are the two end units of the multimedia call. This specifically means that an end unit in an ISDN network must not only support the H.223 protocol, but also the H.223M protocol, in order to be able to communicate with an end unit device in a mobile communication network using the H.223M protocol. The appropriate protocol is then chosen during call set-up.

It may be noted that in the context of the present application the term end unit refers to the device at the end of a call, which is the sum of two functional entities, namely the actual terminal (data communication equipment) and the application (data terminal equipment) running on the terminal.

The article "The H.324 Multimedia Communication Standard" by D. Lindbergh, IEEE Communications Magazine, Vol. 34, No. 12, December 1, 1996, pages 46-51 gives a general overview of the H.324 standard.

WO 99/43172 describes a way of handling multimedia and multiservice calls in a mobile network. One common traffic channel is allocated to a multiservice call which requires simultaneous transmission of two or more different information flows. This common traffic channel is divided into a transparent and a non-transparent sub-channel. The transmitting end has a multiplexer for multiplexing the flows onto the common traffic channel, and the receiving end has a corresponding demultiplexer. The transparent sub-channel is used for transferring time-critical information, whereas the non-transparent sub-channel is used for transmitting information that is less time-critical.

### Object of the present Invention

In the above-described present situation, the establishment of multimedia calls between mobile communications networks and other networks can lead to problems in the mobile network. More specifically, when e.g. a call is set up between a H.324M peer in the mobile network for video telephony, typically 56 kbps are used for video and 8 kbps are used for speech. However, if the video channel is removed or not set up at all (e.g. at request of the mobile user, or due to the fact that the mobile unit is not capable of video), only 8 kbps would be needed. In the case of interworking with ISDN, since a bit-transparent 56/64 kbps channel is used, the radio network would also allocate 56/64 kbps. Since only 8 kbps are needed, scarce radio resources are wasted. Similar problems exist for interworking with H.324 in PSTN. There, H.324 is carried on top of V.34 modems, and rates of either 28.8 kbps or 33.6 kbps are provided.

The straight-forward solution to avoiding band-width waste in the mobile communications network would be to further modify the standards and multimedia multiplexing protocols, or to introduce further protocols. This, however, makes the communication process more complicated, especially in view of an increasing number of different kinds of mobile communication networks interacting, such as GSM, UMTS, ISDN, PSTN, ADSL, etc.

The object of the present invention is to provide a better means and method for avoiding band-width waste in mobile communications systems for multimedia calls.

### Summary of the present invention

This problem is solved by the data routing means of claim 1 and the data routing method of claim 16. Advantageous embodiments are described in the dependent claims.

In accordance with the present invention, the multimedia multiplexing protocols used on the mobile communication side and on the other network side are terminated in the routing means connecting the mobile communication network with the other network. In other words, when establishing a multimedia call between an end unit in the mobile communication network and a different communication network (such as an ISDN network), the multimedia multiplexing protocol (such as H.223M) on the mobile network side has its peer in the mobile end unit and the routing means connecting the mobile network with the ISDN network, and equally the multimedia multiplexing protocol (such as H.223) used on the ISDN side has its peers in the ISDN end unit and the routing means. The routing means is arranged such that each network can use its own specific multimedia multiplexing protocol, and especially data rate allocation for the multimedia call can be performed independently for each network.

Also, beyond the fact that the present invention allows an independent data rate allocation in the two networks, it also provides the advantage that end unit devices in a given network no longer need to support a plurality of different multimedia multiplexing protocols. Much rather, each end unit device for a given network only needs to support the multimedia multiplexing protocol associated with that kind of network.

Therefore, the present invention provides a solution that is far simpler than modifying existing protocols or adding new protocols, and can additionally help in simplifying end unit devices for networks outside of the mobile communication network.

### Brief Description of Figures

- Fig. 1: shows an example of a network architecture in which the present invention can be employed; and
- Fig. 2: shows a protocol layer architecture that embodies the present invention.

### Detailed Description of the Present Invention

Although the present invention shall be described in the following on the basis of specific standards and protocols, such as the above-mentioned protocols H.223 and H.223M, it is to be understood that the invention is applicable to any multimedia multiplexing protocols used in communication networks, e.g. also to H.221. Equally, although the mobile network described in the following will be a GSM network, this is only an example, and the invention can be applied to any type of mobile communication network, such as a UMTS network, a D-AMPS network, or any satellite network based on a circuit-switched protocol.

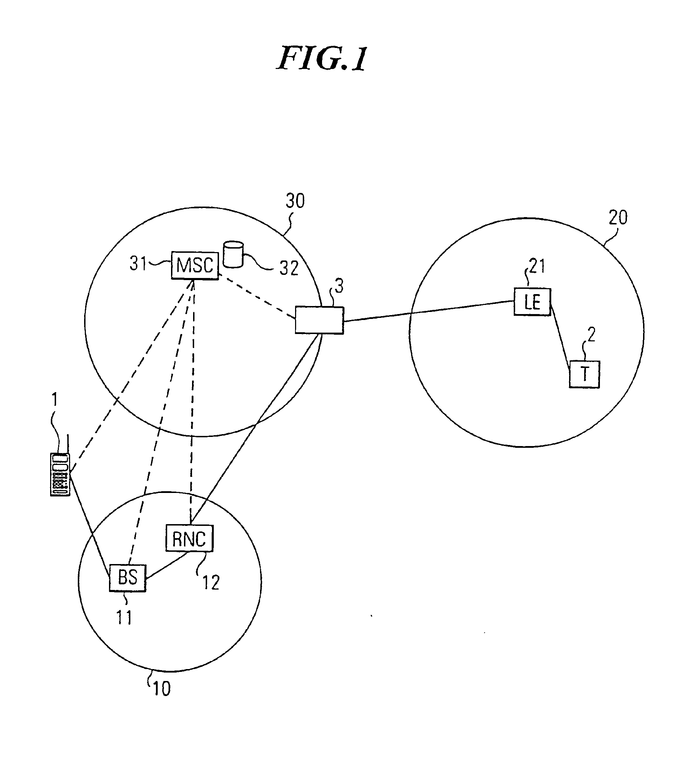

Fig. 1 shows a basic network architecture, where a mobile end unit 1 that belongs to a mobile communication network 10,30 communicate with an end unit device 2 in another network 20, such as an ISDN network. The mobile communication network 10,30 consists of a radio access network (RAN) 10 that comprises a plurality of base stations 11 (of which only one is shown for reasons of clarity) and a radio network controller 12. Furthermore, a core 30 is provided, in which a mobile switching center 31 is contained that controls the routing of calls through the mobile communication network. A visitor location register (VLR) 32 is shown in combination with the MSC 31. Also, a call routing device or the routing means is shown, which is connected to the mobile communication network 10,30 and the other network 20, in order to route calls from one network to the other. This router 3 provides an IWF/MGW (interworking function / media gate way). The other network 20 routes the call via one or more local exchanges 21 to its end unit.

In Fig. 1, a solid line indicates the routing of the call from end unit 1 to end unit 2, whereas a dashed line indicates the control operation of the mobile switching center 31 on the various components in the mobile communication network 10,30. It should be noted that although Fig. 1 shows the IWF/MGW and MSC/VLR as belonging to separate nodes, it is equally well possible that these functions are provided in a single node, for example the node carrying the MSC/VLR. The term routing means in the following shall therefore encompass all possible or suitable arrangements that provide the functions used in connection with the routing of multimedia calls in the present invention.

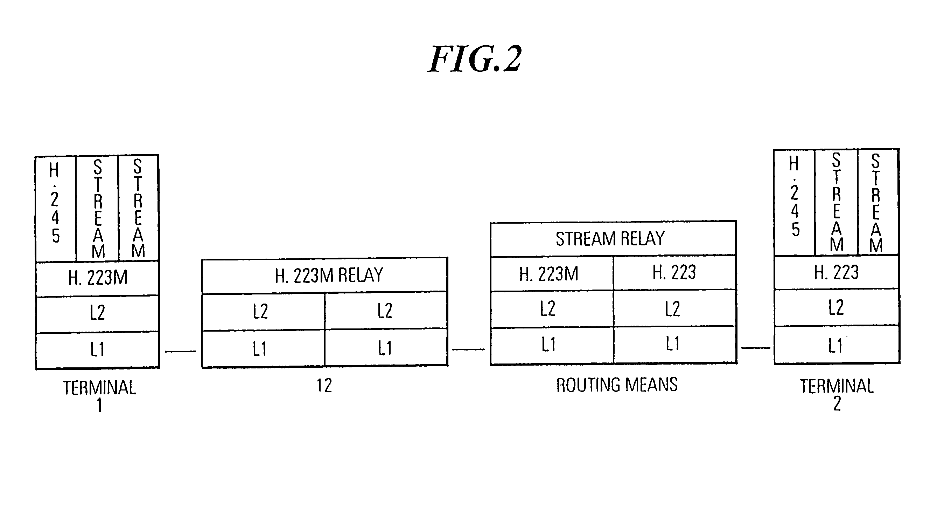

Fig. 2 shows a protocol layer architecture embodying the present invention. The numerals at the bottom of the figure indicate basic locations of implementation of the shown stacks, i.e. the left-hand stack is implemented in end unit 1 of Fig. 1, the second stack in the radio networks controller 12 (as a relay point), the third stack in the routing means, and the fourth stack in end unit 2 in the other network 20. As can be seen, the routing means terminates the H.223M multimedia multiplexing protocol that is associated with the mobile communication network, and the routing means also terminates the H.223 multimedia multiplexing protocol that is associated with the other network 20. Thereby, data rate allocation can be performed independently for the two networks, as a H.223M link is set up with end unit 1 and the routing means as peers, and a H.223 link is set up with the routing means and end unit 2 as peers.

Due to the independence, each link can be set up differently during the call set-up procedure, and modified differently during the course of the call itself.

The precise mechanism for controlling the links will depend on the device architecture, the specific standards and the specific protocols that are used.

According to a first example, the mobile application in the mobile unit handles the multimedia service, from the the multiplexing protocol all the way up to the streams. The mobile terminal only handles the bearer. The mobile application indicates to the mobile terminal what kind of bearer it needs or wants, e.g. which data rate. The mobile terminal only knows the bearer. Therefore, at call setup, the mobile application requests a data rate from the mobile terminal. The mobile terminal signals the initial rate for the call to the network. Then, during the call, the mobile application may detect that the selected rate is too high (e.g. because at first video was planned but is not being used) for the used media types. It can then request a change in data rate. Alternatively, it could also request an increase in data rate, e.g. when a new type of data stream is added. This change of data rate is then again signaled to the network by the mobile terminal.

The mobile application shall choose the requested data rates in accordance with the multimedia data streams being processed. For example, if only an audio stream is present, then a data rate of 8 kbps could be sufficient, whereas if audio and video are to be transported, then more than 8 kbps need to be requested. In H.324 the requirements from the media streams are signaled by the H.245 control protocol. Therefore, in the case of H.324M, the mobile application is responsible for the relation between the data rate and the rate signaled by the H.245 protocol. Therefore, on the network side, the routing means as the other H.223M peer simply handles requests for allocation, deallocation or reallocation of bandwidth (data rate).

According to a second example, the mobile end unit is capable of sending more detailed information to the network, such as explicit messages indicating that it is incapable of supporting certain multimedia capabilities (e.g. incapable of video), or messages indicating that it will not send and/or receive data streams of a certain kind. For example, if end unit 2 is an ISDN end unit and during call set-up it requests a bit rate of 64 kbps, whereas the mobile end unit 1 indicates that it is not capable of video, then an 8 kbps bit rate can be assigned for the connection between end unit 1 and the routing means, whereas the requested 64 kbps connection can be established between the routing means and end unit 2, such that no band-width is wasted in the mobile communications network.

Equally, it is possible that the mobile end unit 1 is capable of various multimedia streams, such as video and audio, and the initial call set-up allocates 56 kbps for video and 8 kbps for audio on the H.223M link between end unit 1 and the routing means, but that end unit 1 during the call disables the video stream (e.g. due to user action), whereupon a reallocation of band width can be performed, such that the total bit rate assigned to the connection between end unit 1 and the routing means is reduced to the bit rate assigned to the audio stream, i.e. 8 kbps. Again, a waste of band width is clearly avoided.

In a general sense this second example means that a mode is provided in the routing means according to which the routing means can detect the presence or absence of a predetermined stream type (e.g. video) in the data coming from the mobile end unit, and can allocate, deallocate or reallocate band-width accordingly. This detection can be performed in any suitable way, e.g. by monitoring the H.245 frames, but is preferably done on the basis of signaling messages from the mobile end unit, be it during call setup or during the call. Such signaling messages can e.g. indicate that the end unit will not send streams of a certain type, or can not send streams of a certain type.

In the above examples, it was assumed that the allocation, deallocation or reallocation of band width (bit rate) is performed the same way in the uplink direction as in the downlink direction. In other words, if the video part of 56 kbps is removed, then this is done both for H.223M frames on the uplink as well as on the downlink. However, it is equally well possible that the operations of allocation, deallocation and reallocation only occur in the uplink direction or the downlink direction, depending on the requests or information sent by the mobile end unit 1 during call set-up or in the course of the call. For example, it is possible that the end unit 1 indicates during call set-up that it will receive a video stream on the downlink, but that it will not send a video signal (e.g. due to user selection in order to save battery power), such that an allocation of 56 kbps for video and 8 kbps for audio is done for the H.223M link in the downlink direction, but only 8 kbps are allocated for audio in the uplink direction. Again, a waste of band width is avoided.

As indicated in Fig. 2, the routing means relays the multimedia streams (shown as being structured in accordance with standard H.245) from H.223M to H.223 and vice versa.

In order to avoid an unnecessary load on the routing means, according to a preferred embodiment associated with the above first example, the present invention additionally provides a mode of operation for the routing means, for which it is initially determined if there is a difference in the initial data rates on the two network sides, and if a change in data rate or bit rate will be requested during a call. Namely, if the initially requested (by end units 1 and 2) and allocated data rates are equal, and both end units signal that no requests for changes will be sent during the call, then the interworking function IWF that responds to indications of a request for changes in band width allocation and performs data rate adaptation can be disabled. Then, an initial band width allocation is performed on the mobile network side and on the side of the other network in accordance with information provided during the call set-up, and then the multimedia multiples protocol frames (H.223M or H.223) are simply reframed. This reduces the load on the routing means.

Although the present invention has been described on the basis of specific examples, it is to be understood that these are not intended as a restriction, but much rather serve to better explain the invention to a person skilled in the art, where the scope of the present invention is defined by the appended claims. Reference signs in the claims are intended for making the claims easier to understand, and do not restrict the scope.

## Claims

1. A data routing means (3, 31, 32) connected to a mobile communications network (10,30) and at least one other communications network (20), for routing calls from said mobile communications network (10,30) to said other communications network (20) and vice versa, where said mobile communications network (10,30) provides multimedia capabilities and data streams of multimedia data are multiplexed and transported in accordance with a first multimedia multiplexing protocol (H.223 M), said other communications network (20) provides multimedia capabilities and data streams of multimedia data are multiplexed and transported in accordance with a second multimedia multiplexing protocol (H.223), and said data routing means (3, 31, 32) is arranged to terminate said first and said second multimedia multiplexing protocols (H.223 M; H.223), such that a call between an end unit (1) in said mobile communications network (10,30) and an end unit (2) in said other communications network (20) that uses multimedia capabilities is carried by the first multimedia multiplexing protocol (H.223 M) on the side of the mobile communications network (10,30) and by the second multimedia multiplexing protocol (H.223) on the side of the other communications network (20), and bit rate allocation in said mobile communications network (10,30) becomes independent of the bit rate allocation in the other communications network (20).

2. A data routing means (3, 31, 32) according to claim 1, **characterized in that** said first multimedia multiplexing protocol (H.223 M) provides multiplexing of data streams of at least a first and a second data type, and provides allocation of a first bit rate for a data stream of the first data type and a second bit rate for a data stream of the second data type in a call that uses multimedia capabilities.

3. A data routing means (3, 31, 32) according to claim 1 or 2, **characterized in that** said data routing means (3, 31, 32) is arranged to allocate bit rates for the call on the mobile communications network side at call setup and/or during the call on the basis of data rate requests sent by the end unit (1).

4. A data routing means (3, 31, 32) according to claim 3, **characterized in that** said data routing means (3, 31, 32) is arranged to determine at call setup if the bit rates requested on the side of the mobile communications network and the data bit rates requested on the side of the other communications network are equal, and if the end unit (1) in the mobile communications network and the end unit (2) in the other communications network indicate that no requests for change in bit rate will be sent during the call, then the function of allocating bit rates during the call is disabled, and data in accordance with said first multimedia multiplexing protocol (H.223 M) is simply rearranged into data in accordance with said second multimedia multiplexing protocol (H.223), without further processing.

5. A data routing means (3, 31, 32) according to claim 2, **characterized in that** said data routing means (3, 31, 32) provides a predetermined mode in which it is arranged to detect if a data stream of the second data type is present in the data coming from an end unit device (1) in the mobile communications network in a given call between the end unit device (1) in the mobile communications network (10,30) and an end unit device (2) in the other communications network (20), and if no data stream of the second type is present, then the total bit rate allocated to said given call in the mobile communications network (10,30) at least in the uplink direction is equal to the first bit rate allocated to the data stream of the first data type.

6. A data routing means (3, 31, 32) according to claim 5, **characterized by** being arranged such that said second bit rate for data streams of the second data type is allocated and/or deallocated and/or reallocated on the basis of request messages sent by the end unit device (1) in the mobile communication network (10,30) during a call.

7. A data routing means (3, 31, 32) according to claim 5, **characterized by** being arranged such that the entering of said predetermined mode and the detection of data streams of the second type is performed on the basis of information sent by the end unit device (1) in the mobile communications network (10,30) during call setup.

8. A data routing means (3, 31, 32) according to claim 7, **characterized in that** said information comprises a message from said end unit device in the mobile communications network (10,30) indicating that no data stream of the second type will be sent by said end unit device (1) in the course of the call or that said end unit device (1) in the mobile communications network (10,30) is not capable of sending data streams of the second type.

9. A data routing means (3, 31, 32) according to one of claims 5 to 8, **characterized by** providing a predetermined second mode in which it is arranged to allocate bit rates for said first and second data types on the basis of second information received from the end unit device in the mobile communications network (10,30) during call setup, where said allocated bit rates remain unchanged during said call.

10. A data routing means (3, 31, 32) according to claim 9, **characterized in that** said second information is a message indicating that the end unit device (1) in the mobile communications network (10,30) will not request rate changes in the course of the call.

11. A data routing means (3, 31, 32) according to claim 9 or 10, **characterized in that** the bit rate for said first data type is 8 kbps and the bit rate for said second data type is 56 kbps.

12. A data routing means (3, 31, 32) according to one of claims 2 to 11, **characterized in that** said first data type is audio data and said second data type is video data.

13. A data routing means (3, 31, 32) according to one of claims 1 to 12, **characterized in that** said mobile communications network (10,30) is one of a GSM network, a UMTS network, a D-AMPS network, and a satellite network based on a circuit-switched protocol.

14. A data routing means (3, 31, 32) according to one of claims 1 to 13, **characterized in that** said other communications network (20) is one of a ADSL network, an ISDN network and a PSTN network.

15. A data routing means (3, 31, 32) according to one of claims 1 to 14, **characterized in that** said first multimedia multiplexing protocol is H.223 and appendix A and B of H.223 and said second multimedia multiplexing protocol is H.223.

16. A mobile communications network (10,30) comprising
- a plurality of mobile end unit devices (1),
- one or more base transceiver devices (11) that communicate with said mobile stations (1),
- a data routing means (3, 31, 32) of one of claims 1 to 15, for communicating with said one or more base transceiver devices (11) in order to route calls from said mobile end unit devices to said other communications network (20), and
- a central control device (31) for controlling the routing of calls from said one or more base transceiver devices (11) to said data routing means (3, 31, 32),
- where during a call that uses multimedia capabilities and is routed through said data routing means (3, 31, 32), a mobile end unit (1) associated with said call is one peer of said first multimedia multiplexing protocol (H.223 M) and the data routing means (3, 31, 32) is the other peer.

17. A mobile communications network (10,30) according to claim 16, **characterized in that** at least some of said mobile end unit devices (1) are arranged such that during the setup of a call that uses multimedia capabilities and is routed through the data routing means (3, 31, 32), they are capable of sending a message to the data routing means (3, 31, 32) that indicates if the mobile end unit device will send data streams of the second data type during the call, and/or a message to the data routing means (3, 31, 32) that indicates that the mobile end unit device is not able to send data streams of said second data type, and/or a message to the data routing means (3, 31, 32) that indicates that the mobile end unit device requests a certain bit rate allocation for the call and will not request rate changes in the course of the call.

18. A method for routing calls using multimedia capabilities through a data routing means (3, 31, 32) connected to a mobile communications network (10,30) and at least one other communications network (20), comprising providing a first multimedia multiplexing protocol (H.223 M) for multiplexing and transporting data streams of multimedia data in said mobile communications network (10,30),
providing a second multimedia multiplexing protocol (H.223) for multiplexing and transporting data streams of multimedia data in said other communications network (20), and
terminating said first and said second multimedia multiplexing protocols at said data routing means (3, 31, 32), such that a call using multimedia capabilities between an end unit in said mobile communications network (10,30) and an end unit in said other communications network (20), is carried by the first multimedia multiplexing protocol (H.223 M) on the side of the mobile communications network (10,30) and by the second multimedia multiplexing protocol (H.223) on the side of the other communications network (20), and bit rate allocation in said mobile communications network (10,30) becomes independent of the bit rate allocation in the other communications network (20).

19. A method according to claim 18, **characterized in that** said first multimedia multiplexing protocol provides multiplexing of data streams of at least a first and a second data type, and provides allocation of a first bit rate for a data stream of the first data type and a second bit rate for a data stream of the second data type in a call that uses multimedia capabilities.

20. A method according to claim 18 or 19, **characterized in that** bit rates for the call on the mobile communications network side are allocated at call setup and/or during the call on the basis of data rate requests sent by the end unit (1).

21. A method according to claim 20, **characterized in that** at call setup it is determined if the bit rates requested on the side of the mobile communications network and the data bit rates requested on the side of the other communications network are equal, and if the end unit (1) in the mobile communications network and the end unit (2) in the other communications network indicate that no requests for change in bit rate will be sent during the call, then the function of allocating bit rates during the call is disabled, and data in accordance with said first multimedia multiplexing protocol (H.223 M) is simply rearranged into data in accordance with said second multimedia multiplexing protocol (H.223), without further processing.

22. A method according to claim 19, **characterized by** said providing a predetermined mode in said data routing means (3, 31, 32) for detecting if a data stream of the second data type is present in the data coming from a mobile communications network (10,30) end unit device in a given call between the end unit device in the mobile communications network (10,30) and a end unit device in the other communications network (20), and if no data stream of the second type is present, then the total bit rate allocated to said given call in the mobile communications network (10,30) at least in the uplink direction is equal to the first bit rate allocated to the data stream of the first data type.

23. A method according to claim 22, **characterized in that** said second bit rate for data streams of the second data type is allocated and/or deallocated and/or reallocated on the basis of request messages sent by the end unit device in the mobile communication system during a call.

24. A method according to claim 22, **characterized in that** the entering of said predetermined mode and the detection of data streams of the second type is performed on the basis of information sent by the end unit device in the mobile communications network (10,30) during call setup.

25. A method according to claim 24, **characterized in that** said information comprises a message from said end unit device in the mobile communications network (10,30) indicating that no data stream of the second type will be sent by said end unit device in the course of the call or that said end unit device in the mobile communications network (10,30) is not capable of sending data streams of the second type.

26. A method according to one of claims 22 to 25, **characterized by** providing a predetermined second mode in which it is arranged to allocate bit rates for said first and second data types on the basis of second information received from the end unit device in the mobile communications network (10,30) during call setup, where said allocated bit rates remain unchanged during said call.

27. A method according to claim 26, **characterized in that** said second information is a message indicating that the end unit device in the mobile communications network (10,30) will not request rate changes in the course of the call.

28. A method according to claim 26 or 27, **characterized in that** the bit rate for said first data type is 8 kbps and the bit rate for said second data type is 56 kbps.

29. A method according to one of claims 19 to 28, **characterized in that** said first data type is audio data and said second data type is video data.

30. A method according to one of claims 18 to 29, **characterized in that** said mobile communications network (10,30) is one of a GSM network, a UMTS network, a D-AMPS network, and a satellite network based on a circuit-switched protocol.

31. A method according to one of claims 18 to 30, **characterized in that** said other communications network (20) is one of an ADSL network, an ISDN network and a PSTN network.

32. A method according to one of claims 18 to 31, **characterized in that** said first multimedia multiplexing protocol is H.223 and appendix A and B of H.223, and said second multimedia multiplexing protocol is H.223.

## Patentansprüche

1. Datenweiterleitungsvorrichtung (3, 31, 32), die mit einem Mobilkommunikationsnetzwerk (10, 30) und zumindest einem anderen Kommunikationsnetzwerk (20) verbunden ist, zum Weiterleiten von Anrufen von dem Mobilkommunikationsnetzwerk (10, 30) zu dem anderen Kommunikationsnetzwerk (20) und umgekehrt, wobei das Mobilkommunikationsnetzwerk (10, 30) Multimedia-Fähigkeiten bereitstellt und Datenströme von Multimediadaten gemäß einem ersten Multimedia-Multiplex-Protokoll (H.223 M) gemultiplext und transportiert werden, wobei das andere Kommunikationsnetzwerk (20) Multimedia-Fähigkeiten bereitstellt und Datenströme von Multimediadaten gemäß einem zweiten Multimedia-Multiplex-Protokoll (H.223) gemultiplext und transportiert werden, und die Datenweiterleitungsvorrichtung (3, 31, 32) angeordnet ist, das erste und zweite Multimedia-Multiplex-Protokoll (H.223 M; H.223) derart zu terminieren, dass ein Anruf zwischen einer Endeinheit (1) in dem Mobilkommunikationsnetzwerk (10, 30) und einer Endeinheit (2) in dem anderen Kommunikationsnetzwerk (20), das Multimedia-Fähigkeiten verwendet, durch das erste Multimedia-Multiplex-Protokoll (H.223 M) an der Seite des Mobilkommunikationsnetzwerks (10, 30) und durch das zweite Multimedia-Multiplex-Protokoll (H.223) an der Seite des anderen Kommunikationsnetzwerkes (20) getragen wird und eine Bitraten-Allokation in dem Mobilkommunikationsnetzwerk (10, 30) unabhängig von der Bitraten-Allokation in dem anderen Kommunikationsnetzwerk (20) wird.

2. Datenweiterleitungsvorrichtung (3, 31, 32) nach Anspruch 1, **dadurch gekennzeichnet, dass** das erste Multimedia-Multiplex-Protokoll (H.223 M) ein Multiplexen von Datenströmen von zumindest einem ersten und einem zweiten Datentyp bereitstellt und eine Allokation einer ersten Bitrate für einen Datenstrom des ersten Datentyps und eine zweite Bitrate für einen Datenstrom des zweiten Datentyps in einem Anruf bereitstellt, der Multimedia-Fähigkeiten verwendet.

3. Datenweiterleitungsvorrichtung (3, 31, 32) nach Anspruch 1 oder 2, **dadurch gekennzeichnet, dass** die Datenweiterleitungsvorrichtung (3, 31, 32) angeordnet ist, Bitraten für den Anruf auf der Mobilkommunikationsnetzwerkseite bei Anrufaufbau und/oder während dem Anruf auf der Basis von Datenratenanforderungen zu allozieren, die durch die Endeinheit (1) gesendet werden.

4. Datenweiterleitungsvorrichtung (3, 31, 32) nach Anspruch 3, **dadurch gekennzeichnet, dass** die Datenweiterleitungsvorrichtung (3, 31, 32) angeordnet ist, einen Anrufaufbau zu bestimmen, falls die Bitraten, die auf der Seite des Mobilkommunikationsnetzwerkes angefordert werden und die Datenbitraten, die auf der Seite des anderen Kommunikationsnetzwerkes angefordert werden, gleich sind und falls die Endeinheit (1) in dem Mobilkommunikationsnetzwerk und die Endeinheit (2) in dem anderen Kommunikationsnetzwerk anzeigen, dass keine Anforderungen zur Änderung in einer Bitrate während dem Anruf gesendet werden, die Funktion eines Allozierens von Bitraten während dem Anruf deaktiviert wird und Daten gemäß dem ersten Multimedia-Multiplex-Protokoll (H.223 M) einfach in Daten gemäß dem zweiten Multimedia-Multiplex-Protokoll (H.223) ohne weiteres Verarbeiten neu angeordnet werden.

5. Datenweiterleitungsvorrichtung (3, 31, 32) nach Anspruch 2, **dadurch gekennzeichnet, dass** die Datenweiterleitungsvorrichtung (3, 31, 32) einen vorbestimmten Modus bereitstellt, indem es angeordnet wird, zu detektieren, falls ein Datenstrom des zweiten Datentyps in den Daten, die von einem Endeinheitengerät (1) in dem Mobilkommunikationsnetzwerk kommen, in einem gegebenen Anruf zwischen dem Endeinheitengerät (1) in dem Mobilkommunikationsnetzwerk (10, 30) und einem Endeinheitengerät (2) in dem anderen Kommunikationsnetzwerk (20) vorliegen und falls kein Datenstrom des zweiten Datentyps vorliegt, die Gesamtbitrate, die zu dem gegebenen Anruf in dem Mobilkommunikationsnetzwerk (10, 30) zumindest in der Uplink-Richtung alloziert ist, gleich zu der ersten Bitrate ist, die zu dem Datenstrom des ersten Datentyps alloziert ist.

6. Datenweiterleitungsvorrichtung (3, 31, 32) nach Anspruch 5, **gekennzeichnet durch** derart angeordnet sein, dass die zweite Bitrate für Datenströme des zweiten Datentyps auf der Basis von Anforderungsnachrichten alloziert und/oder dealloziert und/oder realloziert wird, die **durch** das Endeinheitengerät (1) in dem Mobilkommunikationsnetzwerk (10, 30) während einem Anruf gesendet werden.

7. Datenweiterleitungsvorrichtung (3, 31, 32) nach Anspruch 5, **gekennzeichnet durch** derart angeordnet sein, dass das Betreten des vorbestimmten Modus und die Erfassung von Datenströmen des zweiten Typs auf der Basis von Information durchgeführt wird, die von dem Endeinheitengerät (1) in dem Mobilkommunikationsnetzwerk (10, 30) während einem Anrufaufbau gesendet wird.

8. Datenweiterleitungsvorrichtung (3, 31, 32) nach Anspruch 7, **dadurch gekennzeichnet, dass** die Information eine Nachricht von dem Endeinheitengerät in dem Mobilkommunikationsnetzwerk (10, 30) umfasst, die anzeigt, dass kein Datenstrom des zweiten Typs durch das Endeinheitengerät (1) in dem Verlauf des Anrufs gesendet wird oder dass das Endeinheitengerät (1) in dem Mobilkommunikationsnetzwerk (10, 30) nicht in der Lage ist, Datenströme des zweiten Typs zu senden.

9. Datenweiterleitungsvorrichtung (3, 31, 32) nach einem der Ansprüche 5 bis 8, **gekennzeichnet durch** Bereitstellen eines vorbestimmten zweiten Modus, in dem dieser angeordnet ist, Bitraten für den ersten und zweiten Datentyp auf der Basis von zweiter Information zu allozieren, die von dem Endeinheitengerät in dem Mobilkommunikationsnetzwerk (10, 30) während einem Anrufaufbau empfangen wird, wobei die allozierten Bitraten während dem Anruf unverändert bleiben.

10. Datenweiterleitungsvorrichtung (3, 31, 32) nach Anspruch 9, **dadurch gekennzeichnet, dass** die zweite Information eine Nachricht ist, die anzeigt, dass das Endeinheitengerät (1) in dem Mobilkommunikationsnetzwerk (10, 30) keine Ratenänderungen in dem Verlauf des Anrufs anfordert.

11. Datenweiterleitungsvorrichtung (3, 31, 32) nach Anspruch 9 oder 10, **dadurch gekennzeichnet, dass** die Bitrate für den ersten Datentyp 8 kbps beträgt und die Bitrate für den zweiten Datentyp 56 kbps beträgt.

12. Datenweiterleitungsvorrichtung (3, 31, 32) nach einem der Ansprüche 2 bis 11, **dadurch gekennzeichnet, dass** der erste Datentyp Audio-Daten sind und der zweiten Datentyp Video-Daten sind.

13. Datenweiterleitungsvorrichtung (3, 31, 32) nach einem der Ansprüche 1 bis 12, **dadurch gekennzeichnet, dass** das Mobilkommunikationsnetzwerk (10, 30) eines eines GSM-Netzwerkes, eines UMTS-Netzwerkes, eines D-AMPS-Netzwerkes und eines Satelliten-Netzwerkes ist, das auf einem leitungsvermittelten Protokoll basiert.

14. Datenweiterleitungsvorrichtung (3, 31, 32) nach einem der Ansprüche 1 bis 13, **dadurch gekennzeichnet, dass** das andere Kommunikationsnetzwerk (20) eines eines ADSL-Netzwerkes, eines ISDN-Netzwerkes und eines PSTN-Netzwerkes ist.

15. Datenweiterleitungsvorrichtung (3, 31, 32) nach einem der Ansprüche 1 bis 14, **dadurch gekennzeichnet, dass** das erste Multimedia-Multiplex-Protokoll H.223 und Anhang A und B von H.223 ist und das zweite Multimedia-Multiplex-Protokoll H.223 ist.

16. Mobilkommunikationsnetzwerk (10, 30), mit:
- einer Vielzahl von Mobil-Endeinheitengeräten (1),
- einem oder mehreren Basis-Transceivergeräten (11), die mit den Mobilstationen (10) kommunizieren,
- einer Datenweiterleitungsvorrichtung (3, 31, 32) nach einem der Ansprüche 1 bis 15 zum Kommunizieren mit dem einen oder mehreren Basis-Transceivergeräten (11), um Anrufe von den Mobil-Endeinheitengeräten zu dem anderen Kommunikationsnetzwerk (20) weiterzuleiten, und
- einem Zentralsteuergerät (31) zum Steuern des Weiterleitens von Anrufen von dem einen oder mehreren Basis-Transceivergeräten (11) zu der Datenweiterleitungsvorrichtung (3, 31, 32),
- wobei während einem Anruf, der Multimedia-Fähigkeiten verwendet und der durch die Datenweiterleitungsvorrichtung (3, 31, 32) weitergeleitet wird, eine Mobil-Endeinheit (31), die mit dem Anruf verknüpft ist, ein Peer (Gleichrangiger) des ersten Multimedia-Multiplex-Protokolls (H.223 M) ist und die Datenweiterleitungsvorrichtung (3, 31, 32) der andere Peer ist.

17. Mobilkommunikationsnetzwerk (10, 30) nach Anspruch 16, **dadurch gekennzeichnet, dass** zumindest einige der Mobil-Endeinheitengeräte (1) derart angeordnet sind, dass während dem Aufbau eines Anrufes, der Multimedia-Fähigkeiten verwendet und der durch die Datenweiterleitungsvorrichtung (3, 31, 32) weitergeleitet wird, diese in der Lage sind, eine Nachricht zu der Datenweiterleitungsvorrichtung (3, 31, 32) zu senden, die anzeigt, falls das Mobil-Endeinheitengerät Datenströme des zweiten Datentyps während dem Anruf sendet, und/oder einer Nachricht zu der Datenweiterleitungsvorrichtung (3, 31, 32), die anzeigt, dass das Mobil-Endeinheitengerät nicht in der Lage ist, Datenströme des zweiten Datentyps zu senden, und/oder eine Nachricht zu der Datenweiterleitungsvorrichtung (3, 31, 32), die anzeigt, dass das Mobil-Endeinheitengerät eine bestimmte Bitraten-Allokation für den Anruf anfordert und keine Ratenänderungen in dem Verlauf des Anrufs anfordert.

18. Verfahren zum Weiterleiten von Anrufen unter Verwendung von Multimedia-Fähigkeiten durch eine Datenweiterleitungsvorrichtung (3, 31, 32), die mit einem Mobilkommunikationsnetzwerk (10, 30) und zumindest einem anderen Kommunikationsnetzwerk (20) verbunden ist, mit:
Bereitstellen eines ersten Multimedia-Multiplex-Protokolls (H.223 M) zum Multiplexen und Transportieren von Datenströmen von Multimediadaten in dem Mobilkommunikationsnetzwerk (10, 30),
Bereitstellen eines zweiten Multimedia-Multiplex-Protokolls (H.223) zum Multiplexen und Transportieren von Datenströmen von Multimediadaten in dem anderen Kommunikationsnetzwerk (20), und
Terminieren des ersten und zweiten Multimedia-Multiplex-Protokolls bei der Datenweiterleitungsvorrichtung (3, 31, 32) derart, dass ein Anruf unter Verwendung von Multimedia-Fähigkeiten zwischen einer Endeinheit in dem Mobilkommunikationsnetzwerk (10, 30) und eine Endeinheit in dem anderen Kommunikationsnetzwerk (20) durch das erste Multimedia-Multiplex-Protokoll (H.223 M) an der Seite des Mobilkommunikationsnetzwerkes (10, 30) und durch das zweite Multimedia-Multiplex-Protokoll (H.223) an der Seite des anderen Kommunikationsnetzwerkes (20) getragen wird und eine Bitraten-Allokation in dem Mobilkommunikationsnetzwerk (10, 30) unabhängig von der Bitraten-Allokation in dem anderen Kommunikationsnetzwerk (20) wird.

19. Verfahren nach Anspruch 18, **dadurch gekennzeichnet, dass** das erste Multimedia-Multiplex-Protokoll ein Multiplexen von Datenströmen von zumindest einem ersten und einem zweiten Datentyp bereitstellt und eine Allokation einer ersten Bitrate für einen Datenstrom des ersten Datentyps und einer zweiten Bitrate für einen Datenstrom des zweiten Typs in einem Anruf bereitstellt, der Multimedia-Fähigkeiten verwendet.

20. Verfahren nach Anspruch 18 oder 19, **dadurch gekennzeichnet, dass** Bitraten für den Anruf auf der Mobilkommunikationsnetzwerkseite bei Anrufaufbau und/oder während dem Anruf auf der Basis von Datenratenanforderung alloziert werden, die durch die Endeinheit (1) gesendet werden.

21. Verfahren nach Anspruch 20, **dadurch gekennzeichnet, dass** es bei Anrufaufbau bestimmt wird, falls die Bitraten, die auf der Seite des Mobilkommunikationsnetzwerkes angefordert werden und die Bitraten, die auf der Seite des anderen Kommunikationsnetzwerkes angefordert werden, gleich sind und falls die Endeinheit (1) in dem Mobilkommunikationsnetzwerk und die Endeinheit (2) in dem anderen Kommunikationsnetzwerk anzeigen, dass keine Anforderungen zur Änderung in einer Bitrate während dem Anruf gesendet werden, die Funktion eines Allozierens von Bitraten während dem Anruf deaktiviert wird und Daten gemäß dem ersten Multimedia-Multiplex-Protokoll (H.223 M) einfach in Daten gemäß dem zweiten Multimedia-Multiplex-Protokoll (H.223) ohne weiteres Verarbeiten neu angeordnet werden.

22. Verfahren nach Anspruch 19, **gekennzeichnet durch** das Bereitstellen eines vorbestimmten Modus in der Datenweiterleitungsvorrichtung (3, 31, 32) zum Erfassen, falls ein Datenstrom des zweiten Datentyps in den Daten, die von einem Mobilkommunikationsnetzwerk- (10, 30) Endeinheitengerät kommen, in einem gegebenen Anruf zwischen dem Endeinheitengerät in dem Mobilkommunikationsnetzwerk (10, 30) und einem Endeinheitengerät in dem anderen Kommunikationsnetzwerk (20) vorliegen und falls kein Datenstrom des zweiten Typs vorliegt, die Gesamt-Bitrate, die zu dem zweiten Anruf in dem Mobilkommunikationsnetzwerk (10, 30) zumindest in der Uplink-Richtung alloziert wird, gleich zu der ersten Bitrate ist, die zu dem Datenstrom des ersten Datentyps alloziert wird.

23. Verfahren nach Anspruch 22, **dadurch gekennzeichnet, dass** die zweite Bitrate für Datenströme des zweiten Datentyps auf der Basis von Anforderungsnachrichten alloziert und/oder dealloziert und/oder realloziert wird, durch die durch das Endeinheitengerät in dem Mobilkommunikationssystem während einem Anruf gesendet werden.

24. Verfahren nach Anspruch 22, **dadurch gekennzeichnet, dass** das Betreten des vorbestimmten Modus und die Erfassung von Datenströmen des zweiten Typs auf der Basis von Information durchgeführt wird, die durch das Endeinheitengerät in dem Mobilkommunikationsnetzwerk (10, 30) während einem Anrufaufbau gesendet wird.

25. Verfahren nach Anspruch 24, **dadurch gekennzeichnet, dass** die Information eine Nachricht von dem Endeinheitengerät in dem Mobilkommunikationsnetzwerk (10, 30) umfasst, die anzeigt, dass kein Datenstrom des zweiten Typs durch das Endeinheitengerät in dem Verlauf des Anrufs gesendet wird oder dass das Endeinheitengerät in dem Mobilkommunikationsnetzwerk (10, 30) nicht in der Lage ist, Datenströme des zweiten Typs zu senden.

26. Verfahren nach einem der Ansprüche 22 bis 25, **gekennzeichnet durch** Bereitstellen eines vorbestimmten, zweiten Modus, der angeordnet ist, Bitraten für den ersten und zweiten Datentyp auf der Basis von zweiter Information zu allozieren, die von dem Endeinheitengerät in dem Mobilkommunikationsnetzwerk (10, 30) während einem Anrufaufbau empfangen wird, wobei die allozierten Bitraten während dem Anruf unverändert bleiben.

27. Verfahren nach Anspruch 26, **dadurch gekennzeichnet, dass** die zweite Information eine Nachricht ist, die anzeigt, dass das Endeinheitengerät in dem Mobilkommunikationsnetzwerk (10, 30) keine Bitratenänderungen im dem Verlauf des Anrufs anfordert.

28. Verfahren nach Anspruch 26 oder 27, **dadurch gekennzeichnet, dass** die Bitrate für den ersten Datentyp 8 kbps beträgt und die Bitrate für den zweiten Datentyp 56 kbps beträgt.

29. Verfahren nach einem der Ansprüche 19 bis 28, **dadurch gekennzeichnet, dass** der erste Datentyp Audio-Daten sind und der zweite Datentyp Video-Daten sind.

30. Verfahren nach einem der Ansprüche 18 bis 29, **dadurch gekennzeichnet, dass** das Mobilkommunikationsnetzwerk (10, 30) eines eines GSM-Netzwerkes, eines UMTS-Netzwerkes, eines D-AMPS-Netzwerkes und eines Satelliten-Netzwerkes ist, das auf einem leitungsvermittelten Protokoll basiert.

31. Verfahren nach einem der Ansprüche 18 bis 30, **dadurch gekennzeichnet, dass** das andere Kommunikationsnetzwerk 820) eines eines ADSL-Netzwerkes, eines ISDN-Netzwerkes und eines PSTN-Netzwerkes ist.

32. Verfahren nach einem der Ansprüche 18 bis 31, **dadurch gekennzeichnet, dass** das erste Multimedia-Multiplex-Protokoll H.223 und Appendix A und B von H.223 ist und das zweite Multimedia-Multiplex-Protokoll (H.223) ist.

## Revendications

1. Moyen de routage de données (3, 31, 32) connecté à un réseau de communication mobile (10, 30) et à au moins un autre réseau de communication (20), destiné à router des appels entre ledit réseau de communication mobile (10, 30) et ledit autre réseau de communication (20) et vice-versa, dans lequel ledit réseau de communication mobile (10, 30) fournit des capacités multimédia et les flux de données de données multimédia sont multiplexés et transportés selon un premier protocole de multiplexage multimédia (H.223 M), dans lequel ledit autre réseau de communication (20) fournit des capacités multimédia et les flux de données de données multimédia sont multiplexés et transportés selon un second protocole de multiplexage multimédia (H.223) et dans lequel ledit moyen de routage de données (3, 31, 32) est conçu pour constituer la terminaison desdits premier et second protocoles de multiplexage multimédia (H.223 M ; H.223), si bien qu'un appel utilisant des capacités multimédia entre une unité terminale (1) sur ledit réseau de communication mobile (10, 30) et une unité terminale (2) sur ledit autre réseau de communication (20) est transporté par le premier protocole de multiplexage multimédia (H.223 M) du côté du réseau de communication mobile (10, 30) et par le second protocole de multiplexage multimédia (H.223) du côté de l'autre réseau de communication (20) et l'attribution du débit binaire sur ledit réseau de communication mobile (10, 30) devient indépendante de l'attribution de débit binaire sur l'autre réseau de communication (20).

2. Moyen de routage de données (3, 31, 32) selon la revendication 1, **caractérisé en ce que** ledit premier protocole de multiplexage multimédia (H.223 M) fournit un multiplexage de flux de données d'au moins un premier et un second type et fournit une attribution d'un premier débit binaire pour un flux de données du premier type de données et d'un second débit binaire pour un flux de données d'un second type de données dans un appel qui utilise des capacités multimédia.

3. Moyen de routage de données (3, 31, 32) selon la revendication 1 ou 2, **caractérisé en ce que** ledit moyen de routage de données (3, 31, 32) est conçu pour, à l'établissement de l'appel et/ou pendant l'appel, attribuer des débits binaires à l'appel sur le côté du réseau de communication mobile sur la base des demandes de débit binaire envoyées par l'unité terminale (1).

4. Moyen de routage de données (3, 31, 32) selon la revendication 3, **caractérisé en ce que** ledit moyen de routage de données (3, 31, 32) est conçu pour déterminer à l'établissement de l'appel si les débits binaires demandés sur le côté du réseau de communication mobile et les débits binaires de données demandés sur le côté de l'autre réseau de communication sont égaux et **en ce que**, si l'unité terminale (1) sur le réseau de communication mobile et l'unité terminale (2) sur l'autre réseau de communication indiquent qu'aucune demande de changement du débit binaire ne sera envoyée pendant l'appel, la fonction d'attribution de débits binaires pendant l'appel est inhibée et les données conformes au premier protocole de multiplexage multimédia (H.223 M) sont simplement réordonnées pour obtenir des données conformes au second protocole de multiplexage multimédia (H.223), sans autre traitement.

5. Moyen de routage de données (3, 31, 32) selon la revendication 2, **caractérisé en ce que** ledit moyen de routage de données (3, 31, 32) fournit un mode prédéterminé dans lequel il est conçu pour détecter si un flux de données du second type de données est présent dans les données provenant d'un dispositif d'unité terminale (1) sur le réseau de communication mobile, dans un appel considéré entre le dispositif d'unité terminale (1) sur le réseau de communication mobile (10, 30) et un dispositif d'unité terminale (2) sur l'autre réseau de communication (20) et **en ce que**, si aucun flux de données du second type n'est présent, le débit binaire total attribué audit appel considéré sur le réseau de communication mobile (10, 30), au moins dans la direction montante, est égal au premier débit binaire attribué au flux de données du premier type de données.

6. Moyen de routage de données (3, 31, 32) selon la revendication 5, **caractérisé en ce qu'**il est conçu pour que ledit second débit binaire pour les flux de données du second type de données soit attribué et/ou retiré et/ou ré-attribué sur la base de messages de demande envoyés par le dispositif d'unité terminale (1) sur le réseau de communication mobile (10, 30) pendant un appel.

7. Moyen de routage de données (3, 31, 32) selon la revendication 5, **caractérisé en ce qu'**il est conçu pour que le passage dans ledit mode prédéterminé et la détection des flux de données du second type s'effectuent sur la base des informations envoyées par le dispositif d'unité terminale (1) sur le réseau de communication mobile (10, 30) pendant l'établissement de l'appel.

8. Moyen de routage de données (3, 31, 32) selon la revendication 7, **caractérisé en ce que** lesdites informations comprennent un message dudit dispositif d'unité terminale sur le réseau de communication mobile (10, 30), indiquant qu'aucun flux de données du second type ne sera envoyé par ledit dispositif d'unité terminale (1) au cours de l'appel ou que ledit dispositif d'unité terminale (1) sur le réseau de communication mobile (10, 30) n'est pas capable d'envoyer des flux de données du second type.

9. Moyen de routage de données (3, 31, 32) selon l'une des revendications 5 à 8, **caractérisé en ce qu'**il fournit un second mode prédéterminé dans lequel il est conçu pour attribuer des débits binaires pour lesdits premier et second types de données sur la base de secondes informations reçues du dispositif d'unité terminale sur le réseau de communication mobile (10, 30) pendant l'établissement de l'appel, lesdits débits binaires attribués restant inchangés pendant ledit appel.

10. Moyen de routage de données (3, 31, 32) selon la revendication 9, **caractérisé en ce que** lesdites secondes informations sont constituées d'un message indiquant que le dispositif d'unité terminale (1) sur le réseau de communication mobile (10, 30) ne demandera pas de changements de débit au cours de l'appel.

11. Moyen de routage de données (3, 31, 32) selon la revendication 9 ou 10, **caractérisé en ce que** le débit binaire pour ledit premier type de données est de 8 kbps et le débit binaire pour ledit second type de données est de 56 kbps.

12. Moyen de routage de données (3, 31, 32) selon l'une des revendications 2 à 11, **caractérisé en ce que** ledit premier type de données est constitué de données audio et ledit second type de données est constitué de données vidéo.

13. Moyen de routage de données (3, 31, 32) selon l'une des revendications 1 à 12, **caractérisé en ce que** ledit réseau de communication mobile (10, 30) est un réseau parmi les suivants : réseau GSM, réseau UMTS, réseau D-AMPS et réseau satellitaire fondé sur un protocole à commutation de circuits.

14. Moyen de routage de données (3, 31, 32) selon l'une des revendications 1 à 13, **caractérisé en ce que** ledit autre réseau de communication (20) est un réseau parmi les suivants : réseau ADSL, réseau RNIS et réseau RTPC.

15. Moyen de routage de données (3, 31, 32) selon l'une des revendications 1 à 14, **caractérisé en ce que** ledit premier protocole de multiplexage multimédia est la norme H.223 avec les annexes A et B de la norme H.223 et le second protocole de multiplexage multimédia est la norme H.223.

16. Réseau de communication mobile (10, 30) comprenant :
- une pluralité de dispositifs d'unité terminale mobile
(1) ;
- un ou plusieurs dispositifs émetteurs-récepteurs de base (11) qui communiquent avec lesdites stations mobiles (1) ;
- un moyen de routage de données (3, 31, 32) selon l'une des revendications 1 à 15, destiné à communiquer avec lesdits un ou plusieurs dispositifs émetteurs-récepteurs de base (11) afin de router des appels provenant desdits dispositifs d'unité terminal mobile vers ledit autre réseau de communication (20) ; et
- un dispositif central de commande (31), destiné à commander le routage d'appels provenant desdits un ou plusieurs dispositifs émetteurs-récepteurs de base (11) vers ledit moyen de routage de données (3, 31, 32) ;
- où, au cours d'un appel qui utilise des capacités multimédia et est routé via le moyen de routage de données (3, 31, 32), une unité terminale mobile (1) associée audit appel est un pair dudit protocole de multiplexage multimédia (H.223 M) et le moyen de routage de données (3, 31, 32) est l'autre pair.

17. Réseau de communication mobile (10, 30) selon la revendication 16, **caractérisé en ce qu'**au moins certains desdits dispositifs d'unité terminale mobile (1) sont conçus pour, pendant l'établissement d'un appel qui utilise des capacités multimédia et est routé via le moyen de routage de données (3, 31, 32), être capables d'envoyer au moyen de routage de données (3, 31, 32) un message qui indique si le dispositif d'unité terminale mobile va envoyer des flux de données du second type de données pendant l'appel et/ou d'envoyer au moyen de routage de données (3, 31, 32) un message qui indique que le dispositif d'unité terminale mobile n'est pas capable d'envoyer des flux de données dudit second type de données et/ou d'envoyer au moyen de routage de données (3, 31, 32) un message qui indique que le dispositif d'unité terminale mobile demande une certaine attribution de débit binaire pour l'appel et ne demandera pas de changements de débits au cours de l'appel.

18. Procédé de routage d'appels utilisant des capacités multimédia via un moyen de routage de données (3, 31, 32) connecté à un réseau de communication mobile (10, 30) et à au moins un autre réseau de communication (20), comprenant les étapes consistant à :
fournir un premier protocole de multiplexage multimédia (H.223 M) pour multiplexer et transporter des flux de données multimédia sur ledit réseau de communication mobile (10, 30) ;
fournir un second protocole de multiplexage multimédia (H.223) pour multiplexer et transporter des flux de données de données multimédia sur ledit autre réseau de communication (20) ; et
former la terminaison desdits premier et second protocoles de multiplexage multimédia au niveau dudit moyen de routage de données (3, 31, 32), si bien qu'un appel utilisant des capacités multimédia entre une unité terminale sur ledit réseau de communication mobile (10, 30) et une unité terminale sur ledit autre réseau de communication (20) est transporté par le premier protocole de multiplexage multimédia (H.223 M) sur le côté du réseau de communication mobile (10, 30) et par le second protocole de multiplexage multimédia (H.223) sur le côté de l'autre réseau de communication (20) et que l'attribution des débits binaires sur ledit réseau de communication mobile (10, 30) devient indépendante de l'attribution de débits binaires sur l'autre réseau de communication (20).

19. Procédé selon la revendication 18, **caractérisé en ce que** ledit premier protocole de multiplexage multimédia fournit un multiplexage de flux de données d'au moins un premier et un second type de données et fournit une attribution d'un premier débit binaire pour un flux de données du premier type de données et d'un second débit binaire pour un flux de données du second type de données dans un appel qui utilise des capacités multimédia.

20. Procédé selon la revendication 18 ou 19, **caractérisé en ce que** des débits binaires pour l'appel sur le côté du réseau de communication mobile sont attribués à l'établissement de l'appel et/ou pendant l'appel, sur la base des demandes de débit de données envoyées par l'unité terminale (1).

21. Procédé selon la revendication 20, **caractérisé en ce que**, lors de l'établissement de l'appel, il est déterminé si les débits binaires demandés du côté du réseau de communication mobile et les débits binaires demandés sur le côté de l'autre réseau de communication (20) sont égaux et **en ce que**, si l'unité terminale (1) sur le réseau de communication mobile et l'unité terminale (2) sur l'autre réseau de communication (20) indiquent qu'aucune demande de changement de débit binaire ne sera envoyée pendant l'appel, la fonction d'attribution de débits binaires pendant l'appel est inhibée et les données conformes audit premier protocole de multiplexage multimédia (H.223 M) sont simplement réordonnées pour obtenir des données conformes audit second protocole de multiplexage multimédia (H.223), sans autre traitement.

22. Procédé selon la revendication 19, **caractérisé en ce qu'**il est fourni dans ledit moyen de routage de données (3, 31, 32) un mode prédéterminé destiné à détecter si un flux de données du second type de données est présent dans les données provenant d'un dispositif d'unité terminale sur le réseau de communication mobile (10, 30), dans un appel considéré entre le dispositif d'unité terminale sur le réseau de communication mobile (10, 30) et un dispositif d'unité terminale (2) sur l'autre réseau de communication (20) et **en ce que**, si aucun flux de données du second type n'est présent, le débit binaire total attribué audit appel considéré sur le réseau de communication mobile (10, 30), au moins dans la direction montante, est égal au premier débit binaire attribué au flux de données du premier type de données.

23. Procédé selon la revendication 22, **caractérisé en ce que** ledit second débit binaire pour les flux de données du second type de données est attribué et/ou retiré et/ou ré-attribué sur la base de messages de demande envoyés par le dispositif d'unité terminale sur le réseau de communication mobile pendant un appel.

24. Procédé selon la revendication 22, **caractérisé en ce que** le passage dans ledit mode prédéterminé et la détection des flux de données du second type s'effectuent sur la base des informations envoyées par le dispositif d'unité terminale sur le réseau de communication mobile (10, 30) pendant l'établissement de l'appel.

25. Procédé selon la revendication 24, **caractérisé en ce que** lesdites informations comprennent un message dudit dispositif d'unité terminale sur le réseau de communication mobile (10, 30), indiquant qu'aucun flux de données du second type ne sera envoyé par ledit dispositif d'unité terminale au cours de l'appel ou que ledit dispositif d'unité terminale sur le réseau de communication mobile (10, 30) n'est pas capable d'envoyer des flux de données du second type.

26. Procédé selon l'une des revendications 22 à 25, **caractérisé en ce qu'**il est fourni un second mode prédéterminé conçu pour attribuer des débits binaires pour lesdits premier et second types de données sur la base de secondes informations reçues du dispositif d'unité terminale sur le réseau de communication mobile (10, 30) pendant l'établissement de l'appel, lesdits débits binaires attribués restant inchangés pendant ledit appel.

27. Procédé selon la revendication 26, **caractérisé en ce que** lesdites secondes informations sont constituées d'un message indiquant que le dispositif d'unité terminale sur le réseau de communication mobile (10, 30) ne demandera pas de changements de débit au cours de l'appel.

28. Procédé selon la revendication 26 ou 27, **caractérisé en ce que** le débit binaire pour ledit premier type de données est de 8 kbps et le débit binaire pour ledit second type de données est de 56 kbps.

29. Procédé selon l'une des revendications 19 à 28, **caractérisé en ce que** ledit premier type de données est constitué de données audio et ledit second type de données est constitué de données vidéo.

30. Procédé selon l'une des revendications 18 à 29, **caractérisé en ce que** ledit réseau de communication mobile (10, 30) est un réseau parmi les suivants : réseau GSM, réseau UMTS, réseau D-AMPS et réseau satellitaire fondé sur un protocole à commutation de circuits.

31. Procédé selon l'une des revendications 18 à 30, **caractérisé en ce que** ledit autre réseau de communication (20) est un réseau parmi les suivants : réseau ADSL, réseau RNIS et réseau RTPC.

32. Procédé selon l'une des revendications 18 à 31, **caractérisé en ce que** ledit premier protocole de multiplexage multimédia est la norme H.223 avec les annexes A et B de la norme H.223 et le second protocole de multiplexage multimédia est la norme H.223.
